# FASCICULE DE BREVET EUROPEEN

(11) **EP 2 558 353 B1**
(45) Date de publication et mention de la délivrance du brevet: **08.07.2015**
(21) Numéro de dépôt: 11768347.4
(22) Date de dépôt: 15.04.2011
(51) Int. Cl.: B62D 55/07, A63C 11/10, B60K 11/06, B60K 11/08, B62D 51/00

(54) **APPAREIL DE TRACTION COMPACT**
KOMPAKTE ZUGVORRICHTUNG
COMPACT PULLING APPARATUS

(30) Priorité: 15.04.2010 US 342538 P
(43) Date de publication de la demande: 20.02.2013
(73) Titulaire: Martel, Yvon, Chicoutimi, Québec G7H 8C9 (CA)
(72) Inventeur: Martel, Yvon, Chicoutimi, Québec G7H 8C9 (CA)
(74) Mandataire: Grünecker Patent- und Rechtsanwälte PartG mbB
(86) Numéro de dépôt international: PCT/CA2011/050202
(87) Numéro de publication internationale: WO 2011/127607

(56) Documents cités:
- CA-A1- 1 079 776
- CA-A1- 2 294 527
- FR-A1- 2 431 304
- US-A- 5 363 937

## Description

Le présent dossier revendique la priorité à la demande de brevet déposée aux États-Unis le 15 avril 2010 sous le numéro 61/342,538.

### DOMAINE TECHNIQUE

Le domaine technique concerne les appareils de traction compacts pouvant se déplacer sur des terrains difficiles, comme par exemple des terrains recouverts de neige, de sable, de boue, etc.

### ÉTAT DE LA TECHNIQUE

Plusieurs appareils ont été proposés au fil des années afin de permettre de circuler en terrains difficiles. Parmi ces appareils, plusieurs concernent des appareils compacts permettant une propulsion ou une traction d'une personne, notamment d'un skieur, à l'aide d'une chenille entraînée en rotation par un moteur. On en trouve des exemples dans les documents FR-2,431,304 (Jaulmes) publié le 15 février 1980 et US-4,519,470 (Allisio) publié le 28 mai 1985.

De nombreux autres exemples existent. La plupart de ces appareils utilisent un moteur à essence pour entraîner la chenille en rotation. Certains utilisent un moteur électrique. Les appareils de ce genre peuvent être utiles comme moyens de locomotion légers, notamment là où il est difficile ou encore interdit de circuler à l'aide d'un véhicule plus gros. Par exemple, lorsqu'il s'agit de terrains dont la surface est enneigée, il peut arriver que la neige soit beaucoup trop poudreuse et profonde pour permettre la présence d'une motoneige. Un autre avantage de ces appareils est que leur transport dans un autre véhicule est beaucoup plus simple et facile que dans le cas d'un véhicule plus gros et plus lourd, comme par exemple une motoneige.

Malheureusement, aucun des appareils proposés antérieurement ne s'est révélé être entièrement bien adapté aux conditions hivernales très rigoureuses que l'on peut retrouver à certaines périodes de l'année dans les endroits où ces appareils sont susceptibles d'être utiles. Par exemple, une température très froide peut réduire considérablement la fiabilité et l'autonomie d'un appareil muni d'un moteur électrique alimenté par des batteries. Dans le cas d'un moteur à essence, la combinaison du froid extérieur et de la chaleur dégagée par le moteur peut occasionner des accumulations de glace et de neige compactée à des endroits sensibles de l'appareil. De plus, les températures moins froides sont davantage susceptibles d'occasionner des infiltrations d'eau dans l'appareil et ainsi causer des pannes qui peuvent être difficile à réparer, surtout lorsqu'elles surviennent dans des endroits loin en forêt ou dans d'autres endroits difficiles d'accès.

Les appareils proposés antérieurement ne permettent pas non plus de transporter facilement un générateur électrique à des endroits difficiles d'accès.

Il est donc clair que des améliorations dans le domaine technique concerné sont encore nécessaires.

### SOMMAIRE

L'invention est définie par les revendications indépendantes 1 et 13. Selon un aspect, il est proposé un appareil de traction compact, caractérisé en ce qu'il inclut : un boîtier étanche de forme allongée s'étendant dans un axe longitudinal et définissant une chambre interne, le boîtier ayant une paroi supérieure et une paroi inférieure; une chenille disposée autour du boîtier selon son axe longitudinal et permettant à l'appareil de se mouvoir lorsque la chenille est entraînée en rotation autour du boîtier; un guidon relié au boîtier et s'étendant substantiellement vers l'arrière; un moteur d'entraînement de la chenille, le moteur étant situé dans la chambre interne du boîtier et incluant un arbre de sortie relié mécaniquement à la chenille; et un circuit de ventilation de l'intérieur de la chambre interne du boîtier, le circuit de ventilation comprenant une entrée d'air et une sortie d'air qui communiquent avec l'extérieur du boîtier, le circuit de ventilation permettant de maintenir une température au-dessus du point de congélation à l'intérieur de la chambre interne lorsque la température extérieure est plus basse et permettant de refroidir l'intérieur de la chambre interne lorsque sa température est au-dessus d'une limite supérieure.

Selon un autre aspect, il est proposé un appareil de traction compact, caractérisé en ce qu'il inclut : un boîtier étanche de forme allongée s'étendant dans un axe longitudinal et définissant une chambre interne, le boîtier ayant une paroi supérieure et une paroi inférieure; une chenille disposée autour du boîtier selon son axe longitudinal et permettant à l'appareil de se mouvoir lorsque la chenille est entraînée en rotation autour du boîtier; un guidon relié au boîtier et s'étendant substantiellement vers l'arrière; un générateur placé dans la chambre interne du boîtier et servant à produire de l'électricité pouvant alimenter un équipement externe; et un moteur à essence servant à sélectivement entraîner la chenille en rotation et à faire tourner le générateur, le moteur étant situé dans la chambre interne du boîtier.

Selon un autre aspect, il est proposé une méthode de fabrication d'un appareil telle que définit précédemment.

Selon un autre aspect, il est proposé l'usage d'un appareil de traction compact tel que proposé précédemment, caractérisé en ce que l'appareil circule sur un terrain enneigé.

Selon un autre aspect, il est proposé une méthode d'utiliser un appareil de traction compact du type comprenant un boîtier étanche de forme allongée s'étendant dans un axe longitudinal et définissant une chambre interne dans laquelle est placé un moteur, et comprenant également une chenille disposée autour du boîtier selon son axe longitudinal et permettant à l'appareil de se mouvoir lorsque la chenille est entraînée en rotation autour du boîtier à l'aide du moteur; la méthode étant caractérisée en ce qu'elle comprend les étapes simultanées suivantes : maintenir une température minimale dans la chambre interne en utilisant de la chaleur dégagée par le moteur; évacuer la chaleur dans la chambre interne si la température dépasse une valeur limite; et maintenir une pression positive dans la chambre interne.

Davantage de détails sur ces aspects de même que sur d'autres aspects du concept proposé seront apparent à la lumière de la description détaillée qui suit et des figures en annexe.

### BRÈVE DESCRIPTION DES FIGURES

La figure 1 est une vue isométrique d'un exemple d'un appareil réalisé selon le concept proposé;
La figure 2 est une vue de côté de l'appareil montré à la figure 1;
La figure 3 est une vue similaire à la figure 1 mais montre l'appareil sans sa chenille et sans les parois latérales sur les côtés de son boîtier;
La figure 4 est une vue similaire à la figure 3 mais montre le côté gauche de l'appareil vu de l'arrière;
La figure 5 est une vue du côté droit de l'appareil montré à la figure 3;
La figure 6 est une vue du dessus de l'appareil montré à la figure 3;
La figure 7 est une vue similaire à la figure 1 mais dans laquelle l'opérateur est debout dans un traîneau attelé à l'appareil; et
Les figures 8 à 13 sont des vues similaires aux figures 1 à 6 mais montrent un deuxième exemple d'appareil dans lequel un moteur électrique est utilisé.

### DESCRIPTION DÉTAILLÉE

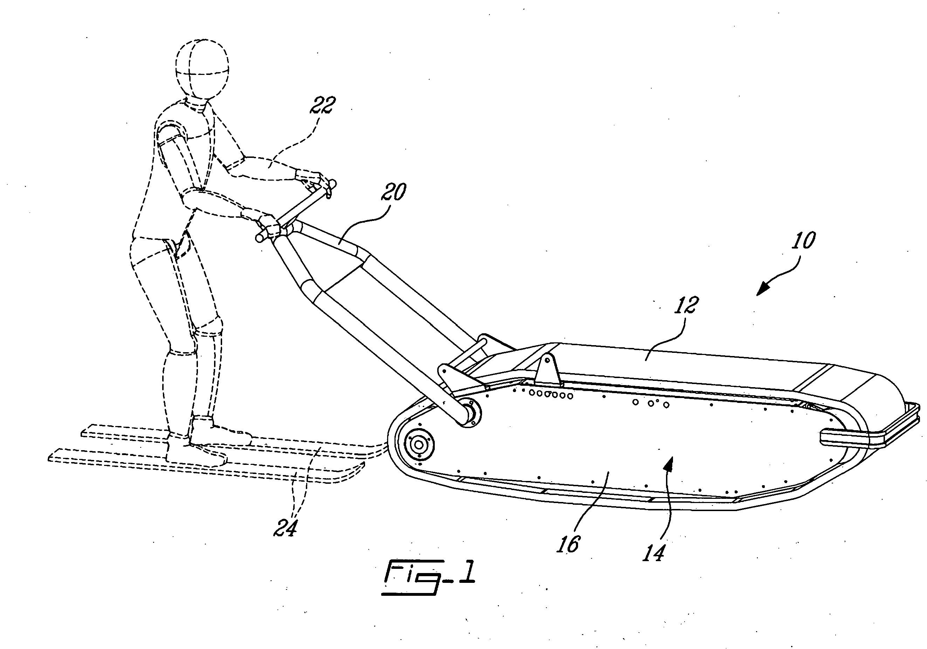

La figure 1 est une vue isométrique d'un exemple d'un appareil 10 réalisé selon le concept proposé. Dans cet exemple, l'appareil 10 utilise un moteur à essence pour faire tourner une chenille 12 placée autour d'un boîtier étanche 14 ayant une forme allongée. Il est à noter à ce point-ci que la référence à un boîtier « étanche » signifie que sa construction est étanche mais n'exclut pas la présence d'un circuit de ventilation de l'intérieur du boîtier 14. Ce circuit de ventilation comprend au moins une entrée d'air et au moins une sortie d'air. Le circuit de ventilation permet notamment de refroidir l'intérieur du boîtier 14 lorsque sa température est au-dessus d'une limite supérieure, comme par exemple au-dessus de 25°C. D'autres valeurs sont également possibles.

La rotation de la chenille 12 autour du boîtier 14 permet à l'appareil 10 de se mouvoir. Le boîtier 14 a une forme surbaissée afin de garder son centre de gravité le plus bas possible. Le boîtier 14 comprend une paroi latérale 16 de chaque côté. Le boîtier 14 peut être fait par exemple d'un matériau métallique, plastique ou les deux. L'aluminium est un exemple d'un matériau possible pour le boîtier 14 car ce matériau est léger et résistant. La chenille 12 peut être faite de caoutchouc ou d'un autre polymère. D'autres matériaux sont possibles.

L'appareil 10 comprend un guidon 20 qui est relié au boîtier 14. Le guidon 20 s'étend substantiellement vers l'arrière de l'appareil 10. Le guidon 20 est destiné à être tenu et manipulé par un opérateur 22 situé à l'arrière de l'appareil 10, tel qu'illustré de façon semi-schématique à la figure 1. Le guidon 20 peut être pivotant ou fixe, selon les besoins. Lorsqu'il est pivotant, il est possible de limiter le pivotement du guidon 20 entre un angle minimum et un angle maximum par rapport à l'horizontal.

L'opérateur 22 peut être équipé de skis 24 (ou l'équivalent) ou encore être à bord d'un traîneau attelé à l'appareil 10. Comme on peut le constater à la figure 1, le centre de gravité de l'appareil 10 est sous la hauteur des genoux de l'opérateur 22.

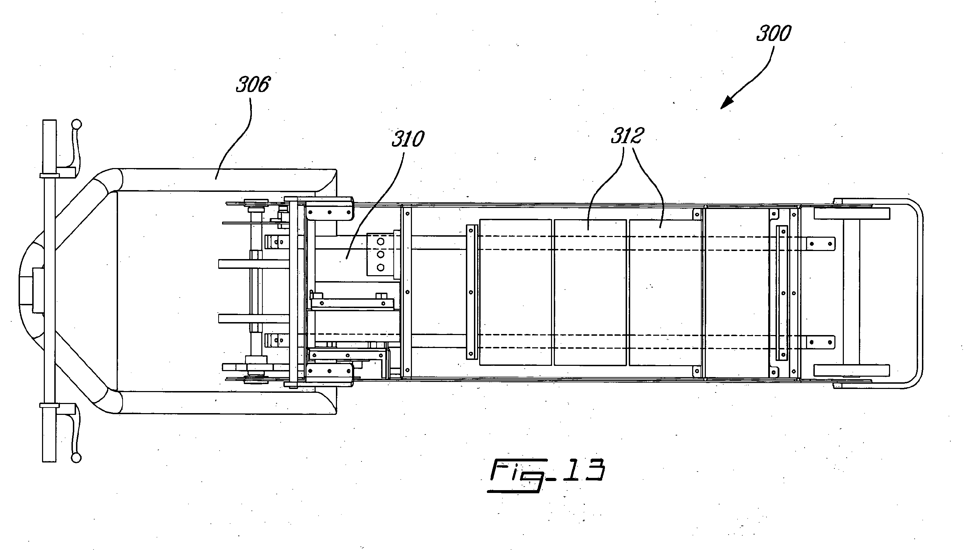

L'opérateur 22 dispose de contrôles sur les poignées du guidon 20 lui permettant notamment de contrôler la vitesse de déplacement de l'appareil 10 et d'autres fonctions. Les contrôles (non illustrés) peuvent être reliés au boîtier 14 à l'aide de fils et/ou de moyens de communications sans fiil. Selon le modèle, il est notamment possible de prévoir un dispositif permettant à l'appareil 10 de reculer par la force de son moteur, ce qui peut s'avérer très utile dans certaines circonstances. Des leviers permettant d'activer un frein peuvent aussi être prévus (voir la figure 13). Ces leviers peuvent être disposés de façon similaire aux freins d'une bicyclette ou d'une moto, par exemple. D'autres éléments peuvent être montés sur le guidon 20 selon les besoins, notamment une lampe, des cadrans indicateurs, etc.

Lorsqu'il circule vers l'avant, l'appareil 10 tire l'opérateur 22 et, s'il y a lieu, déplace une charge utile, comme par exemple une charge utile placée à bord d'un traîneau attelé à l'appareil 10. Un tel appareil 10 peut facilement tirer une charge équivalente à deux fois son poids dans de la neige poudreuse. Par exemple, des tests effectués à l'aide d'un appareil de 125 kg (275 lb) ont démontrés qu'un tel appareil pouvait tirer une charge de 225 kg (550 lb) sur une distance de 150 km avec un seul plein d'essence.

L'opérateur 22 peut modifier la direction de déplacement de l'appareil 10 en bougeant latéralement le guidon 20 dans la direction opposée au virage à effectuer. Cette action est similaire à celle faite par l'opérateur d'une petite tondeuse à gazon conventionnelle.

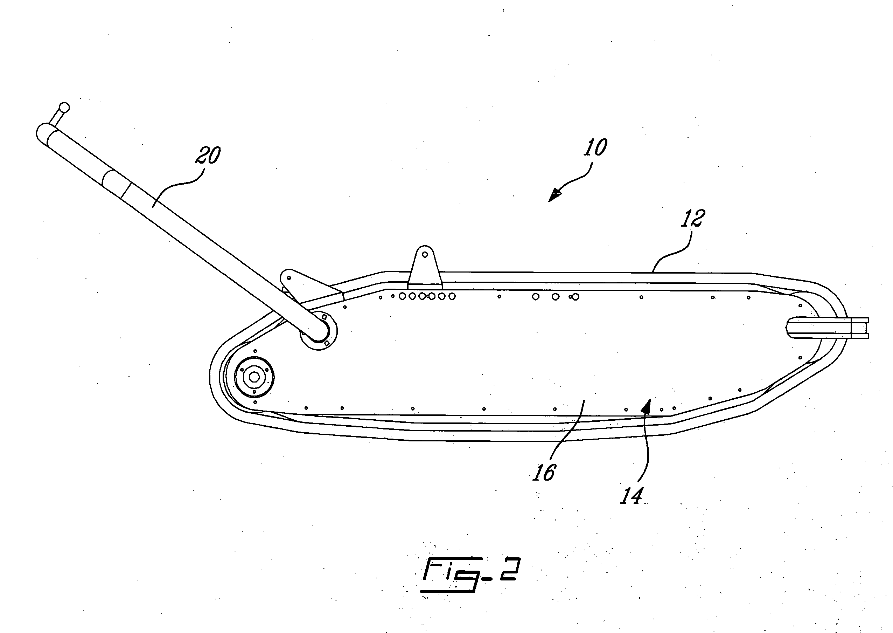

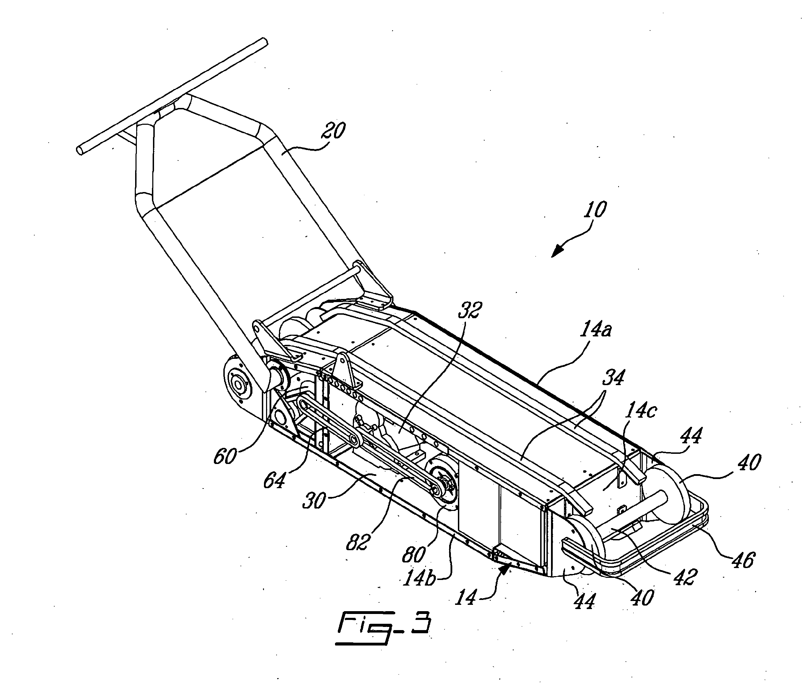

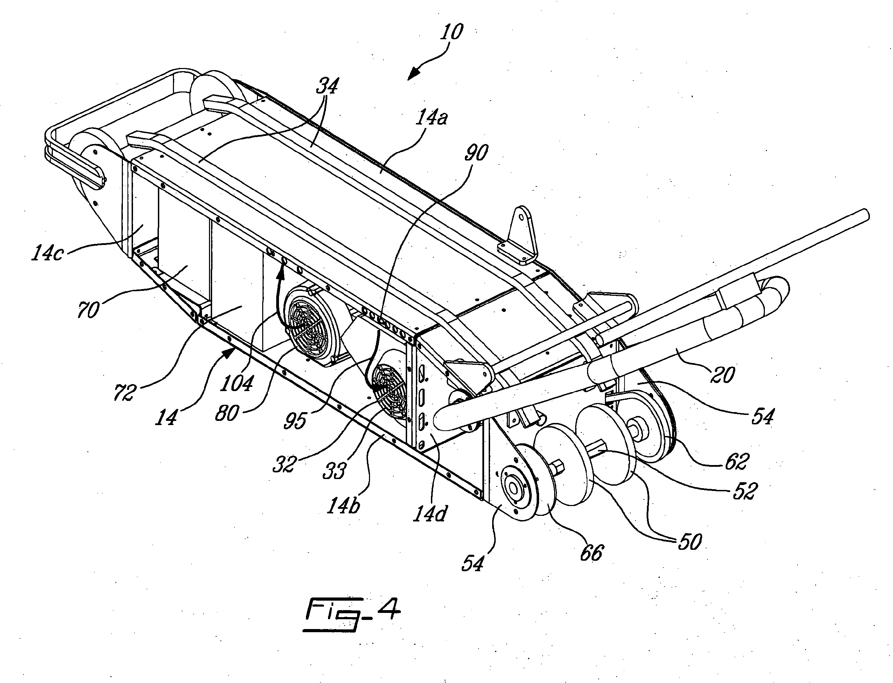

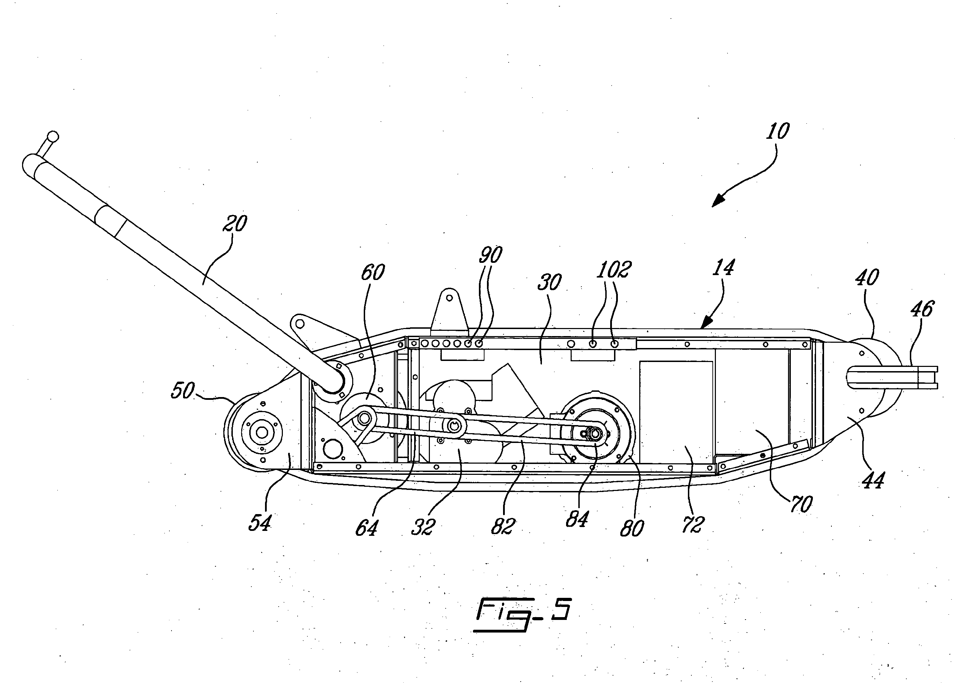

La figure 2 est une vue de côté de l'appareil 10 montré à la figure 1. Les figures 1 et 2 montrent l'appareil 10 assemblé. La figure 3 est une vue similaire à la figure 1 mais montre l'appareil 10 sans sa chenille 12 et sans les parois latérales 16 sur les côtés de son boîtier 14. La figure 4 est une vue similaire à la figure 3 mais montre le côté gauche de l'appareil 10 vu de l'arrière. La figure 5 est une vue du côté droit de l'appareil 10 montré à la figure 3.

Comme on peut le voir en particulier aux figures 3 et 4, le boîtier 14 forme une chambre interne 30 dans laquelle sont placés différentes composantes de l'appareil 10, notamment son moteur à essence 32. Le boîtier 14 possède également une paroi supérieure 14a, une paroi inférieure 14b, une paroi avant 14c et une paroi arrière 14d. Le boîtier 14 possède une structure de renforcement, laquelle peut inclure une ou plusieurs parois internes pouvant compartimenter la chambre interne 30. Les compartiments communiquent entre eux.

Une paire de glissières supérieures 34 est disposée de façon longitudinale sur la paroi supérieure 14a du boîtier 14. Une paire de glissières inférieures, similaire à celle sur la paroi supérieure 14a, est disposée de façon longitudinale sur la paroi inférieure 14b du boîtier 14. Les glissières sont faites d'un matériau ayant un coefficient de friction très bas. Elles permettent notamment à la chenille 12 de tourner autour du boîtier 14 et de réduire la friction entre la face intérieure de la chenille 12 et l'extérieur du boitier 14. Elles servent aussi de guides pour garder la chenille 12 dans l'axe de l'appareil 10. Les glissières s'étendent sur quelques centimètres au-delà des extrémités avant et arrière des parois supérieure 14a et inférieure 14b afin de supporter la chenille 12 sur presque toute la longueur de l'appareil 10.

Au moins un rouleau avant est monté en rotation à l'avant du boîtier 14. Dans l'exemple illustré, deux rouleaux avant 40 sont prévus. Les rouleaux avant 40 sont montés coaxialement autour d'un axe transversal avant 42, lequel est supporté par un axe interne graissé fixé à ses extrémités à deux plaques opposées 44 disposées parallèlement à l'axe longitudinal de l'appareil 10. Les plaques 44 sont reliées de façon rigide à l'avant du boîtier 14. Également dans l'exemple illustré, un pare-chocs 46 est prévu tout à l'avant de l'appareil 10. Les extrémités du pare-chocs 46 sont reliées aux deux plaques 44, tel que montré notamment aux figures 3 et 4. Un dégagement suffisant est prévu entre l'intérieur du pare-chocs 46 et les rouleaux avant 40 pour permettre à la chenille 12 de tourner autour du boîtier 14 sans accrocher l'intérieur du pare-chocs 46.

Au moins un rouleau arrière est monté en rotation à l'arrière du boîtier 14. Dans l'exemple illustré, deux rouleaux arrière 50 sont prévus. Les rouleaux arrière 50 sont montés coaxialement autour d'un axe transversal arrière 52, lequel est supporté à ses extrémités par des roulements situés dans deux plaques opposées 54 disposées parallèlement à l'axe longitudinal de l'appareil 10. Les plaques 54 sont reliées de façon rigide à l'arrière du boîtier 14. Également dans l'exemple illustré, un lien mécanique est prévu entre l'arbre de sortie d'une transmission 60 située dans le boîtier 14 et l'axe transversal arrière 52. Les rouleaux arrière 50 sont donc utilisés pour entraîner la chenille 12 en rotation afin de pouvoir déplacer l'appareil 10. Différents types de liens mécaniques peuvent être utilisés entre la transmission 60 et l'axe transversal arrière 52. Celui qui est illustré comprend une courroie 62 ou une chaîne et permet une réduction de la vitesse de rotation entre l'arbre de sortie de la transmission 60 et l'axe transversal arrière 52. D'autres types de liens et configurations sont également possibles. Le lien mécanique entre le moteur 32 et la transmission 60 est assuré par une courroie 64. La transmission 60 peut permettre par exemple la marche avant et arrière. Elle peut avoir un ou encore plusieurs vitesses, ou bien être à vitesse variable.

L'axe transversal arrière 52 supporte également un disque de frein 66, lequel est montré à la figure 4. Le disque est placé près de l'extrémité de gauche dans l'exemple. Les mâchoires du frein sont reliées au boîtier 14 et peuvent être actionnées par l'opérateur 22 à partir du guidon 20 (voir la figure 13).

Le moteur d'entraînement 32 de la chenille 12 dans l'exemple des figures 1 à 4 est un moteur à essence placé directement à l'avant de la transmission 60. Une paroi transversale intermédiaire est présente dans l'exemple illustré afin de renforcer la partie entre le moteur à essence 32 et la transmission 60. Le moteur à essence 32 est alimenté en carburant à partir d'un réservoir 70 situé à l'avant de la chambre interne 30 de l'appareil 10. Une batterie 72 est placée à côté du réservoir à essence. Cette batterie 72 sert notamment à alimenter le démarreur électrique du moteur à essence 32. L'opérateur 22 peut ainsi démarrer et arrêter le moteur 32 sans avoir à y accéder directement.

L'appareil 10 des figures 1 à 5 intègre également un générateur 80 placé dans la chambre interne 30 et pouvant produire de l'électricité destiné à alimenter un ou des équipements externes à un voltage correspondant notamment à une prise de courant domestique, comme par exemple 110V ou 220V/240V à 60Hz ou encore à 50Hz. Une ou des prises de courant sont disponibles sur l'appareil 10 ou encore sur le générateur 80 lui-même. Le générateur 80 comprend un rotor interne pouvant être entraîné en rotation à l'aide du même moteur à essence 32. La possibilité de générer de l'électricité à partir de l'appareil 10 peut être très avantageuse pour des utilisateurs tels que des ouvriers appelés à utiliser des outils électriques sur des sites isolés, ou encore des propriétaires de chalets situés loin des zones habitées. De très nombreuses autres utilisations peuvent être envisagées. Un générateur ayant une puissance de 4000 à 6000W peut être installé dans un appareil 10 de la taille représentée. Un générateur plus petit ou même plus gros est aussi possible.

L'axe du générateur 80 est disposé transversalement à l'axe longitudinal de l'appareil 10. Le générateur 80 pourrait aussi être placé autrement dans certains modèles. Il est relié à l'arbre de sortie du moteur à essence 32 par une courroie de transmission 82. Un embrayage électrique 84 monté sur l'arbre du générateur 80 permet d'activer et de désactiver à distance le lien mécanique entre le générateur et le moteur à essence 32. Ainsi, lorsque le générateur 80 n'a pas à être utilisé, comme par exemple lorsque l'appareil 10 est en déplacement, la rotation inutile du rotor du générateur 80 peut être évitée. Lorsque le générateur 80 est en fonction, la transmission 60 de l'appareil 10 est mise au neutre.

L'admission d'air neuf à l'intérieur de la chambre interne 30 du boîtier 14 se fait par une série d'ouvertures 90 prévues sur au moins un côté du boîtier 14, immédiatement sous la paroi supérieure 14a. Les ouvertures 90 ont un diamètre relativement petit afin de permettre une diminution de l'ingestion de neige et de débris, comme par exemple des brindilles de bois ou autre. L'air qui passe par les ouvertures 90 entre dans une boîte d'admission 92 qui collecte l'air provenant de toutes les ouvertures 90 de chaque côté du boîtier 14. Lors de l'utilisation de l'appareil 10, la boîte d'admission 92 est chauffée par le dessous grâce à la chaleur dégagée par le moteur à essence 32 et qui circule dans la chambre interne 30. Cette chaleur permet de garder la chambre interne 30 bien au-dessus du point de congélation (0°C) même si la température extérieure est très froide, comme par exemple sous le -20°C. Grâce à cette chaleur, toute particule de neige qui entre dans la boîte d'admission 92 peut fondre et s'égoutter vers l'extérieur, et ce, même par temps froid. L'air sort de la boîte d'admission 92 par un tuyau de sortie 94 qui est circulaire dans l'exemple. Le haut du tuyau de sortie 94 peut être surélevé de plusieurs millimètres par rapport au fond de la boîte d'admission 92 afin d'éviter l'écoulement de l'eau directement vers la chambre interne 30.

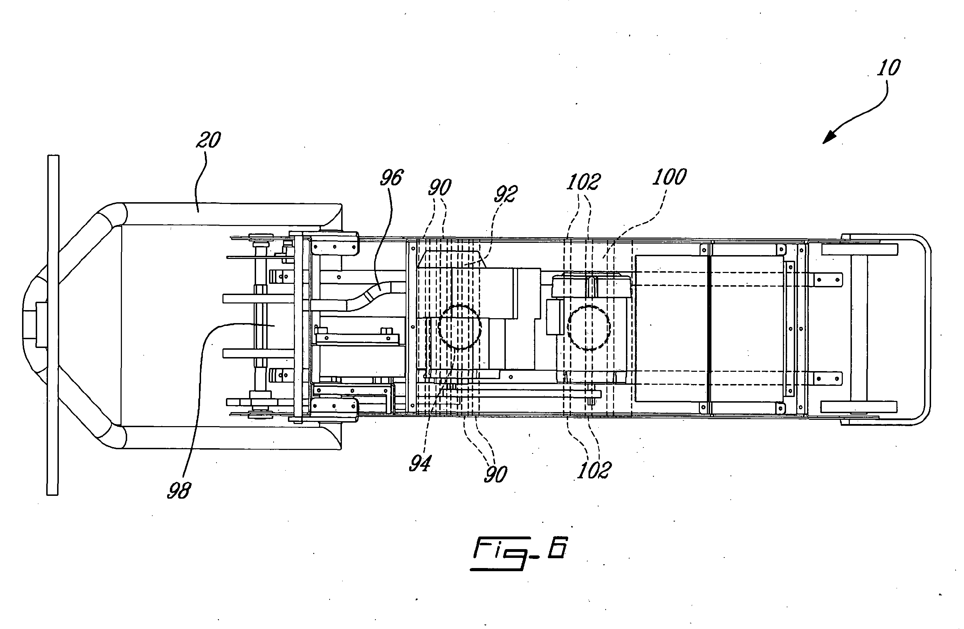

La figure 6 est une vue du dessus de l'appareil 10 montré à la figure 3. On peut y voir la boîte d'admission d'air 92. L'air qui sort de la boîte d'admission 92 est ensuite canalisé dans un conduit flexible 95 (illustré de façon schématique à la figure 4) menant à l'entrée 33 de la volute du ventilateur de refroidissement intégrée au moteur à essence 32. Le ventilateur dans le moteur 32 génère ainsi la force de succion requise pour aspirer l'air par les ouvertures 90. L'air de refroidissement passe autour du ou des cylindres du moteur à essence 32 et aboutit ensuite à l'intérieur de la chambre interne 30.

La sortie de l'air de l'intérieur de l'appareil 10 s'effectue de deux façons. D'une part, la combustion de l'essence dans le moteur 32 génère des gaz d'échappement. L'air servant à cette combustion est admis à l'intérieur du moteur 32 à partir de l'intérieur de la chambre interne 30 ou peut aussi provenir directement de la boîte d'admission 92 dans le cas de certains moteurs. Les gaz d'échappement à la sortie du ou des cylindres du moteur 32 sont ensuite dirigés vers l'arrière de l'appareil 10 par un tuyau d'échappement 96, lequel est montré à la figure 6. La sortie du tuyau d'échappement 96 se situe dans l'espace 98 où se trouvent l'axe transversal arrière 52 et les deux rouleaux arrière 50. Cet espace 98 est partiellement obstrué par la présence de la chenille 12 lorsque l'appareil 10 est assemblé. Cette configuration permet notamment de réduire le bruit et d'éviter tout contact possible de la peau ou des vêtements de l'opérateur 22 avec la sortie chaude du tuyau d'échappement 96. D'autres configurations sont également possibles.

De l'air est aussi évacué de l'intérieur de la chambre interne 30 par une sortie d'air qui fait partie du circuit de ventilation. L'air passant par la sortie traverse tout d'abord par le circuit de refroidissement du générateur 80 et circule ensuite par un conduit flexible 104 (représenté de façon schématique à la figure 4) jusqu'à l'entrée d'une boîte de sortie d'air 100. La boîte de sortie 100 a une construction similaire à celle de la boîte d'admission 92. L'air est ensuite évacuée par des ouvertures 102 placés sur au moins un côté du boîtier 14.

Lorsque le générateur 80 est en fonction, le ventilateur intégré au générateur 80 contribue au déplacement de l'air afin d'augmenter le débit d'air pour son refroidissement. Des ventilateurs additionnels placés en série sur les conduits flexibles reliés à l'entrée et à la sortie d'air peuvent permettent d'augmenter davantage la circulation d'air si la température dans la chambre interne 30 devient trop élevée. Ces ventilateurs peuvent être mis en marche automatiquement grâce à un thermostat muni d'une sonde de température ou d'un autre dispositif.

L'appareil 10 est configuré de telle sorte qu'une pression positive est créée dans la chambre interne 30. Cela est réalisé en prévoyant une surface totale d'admission de l'air plus grande que la surface totale de sortie. Dans l'exemple, le nombre d'ouvertures 90 est plus grand que le nombre d'ouvertures 102. La pression positive permet notamment d'obtenir une meilleure étanchéité du boîtier 14.

Lorsque l'appareil 10 est en mouvement, les côtés du boîtier 14 sont fermés de façon étanche à l'aide des parois latérales 16, lesquelles sont montrées aux figures et 2. Ces parois latérales 16 sont visées ou autrement fixées au reste du boîtier 14. L'intérieur du boîtier 14 demeure ainsi étanche et sec lors de l'utilisation de l'appareil 10.

Tel qu'il est montré à la figure 5, le dessous du boîtier 14 est bombé en son centre. Cette surélévation est d'environ 3 cm à l'avant et à l'arrière de la chenille 12 dans l'appareil 10 montré en exemple. Cette partie centrale correspond environ au tiers de la longueur de l'appareil 10. La surélévation facilite notamment le mouvement de lacet lors des virages ainsi que le pivotement manuel de l'appareil 10 sur des surfaces dures et rugueuses, comme par exemple l'asphalte et le béton. De plus, l'avant de la paroi inférieure 14b définit un angle par rapport à l'horizontal. L'axe transversal avant 42 est ainsi plus haut que l'axe transversal arrière 52. Cela facilite aussi le passage par-dessus des obstacles.

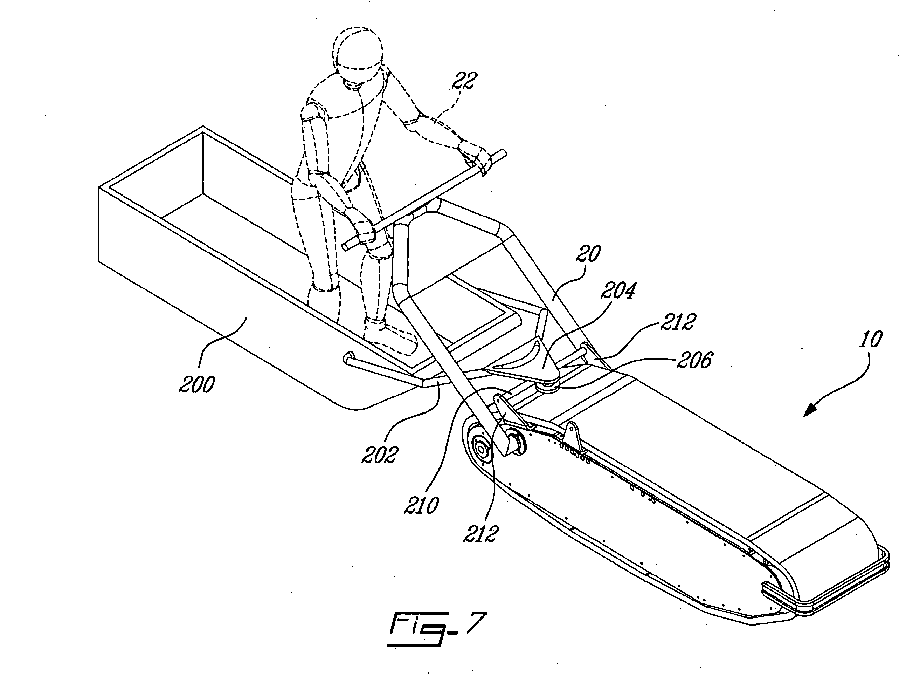

La figure 7 est une vue similaire à la figure 1 mais dans laquelle l'opérateur 22 est debout dans un traîneau 200 attelé à l'appareil 10. L'attelage 202 du traîneau 200 est relié à un support 210 ayant la forme, dans l'exemple montré, d'une tige transversale droite ou encore légèrement recourbée vers l'arrière en son centre. La tige transversale 210 est soutenue par deux plaques correspondantes 212 projetant vers le haut du boîtier 14. L'attelage 202 comprend deux bras de retenue du traîneau 200, lesquels sont fixés à une plaque 204 qui peut pivoter autour d'un axe vertical à sa jonction avec un élément d'attache 206. L'élément d'attache 206 peut coulisser de gauche à droite le long de la tige transversale 210 grâce à des poulies placées de chaque côté de l'élément d'attache 206. Dans un virage, l'élément d'attache 206 peut alors se déplacer vers l'une des extrémités de la tige transversale 210, ce qui facilite la maniabilité de l'appareil 10 et diminue l'effort requis de la part de l'opérateur 22.

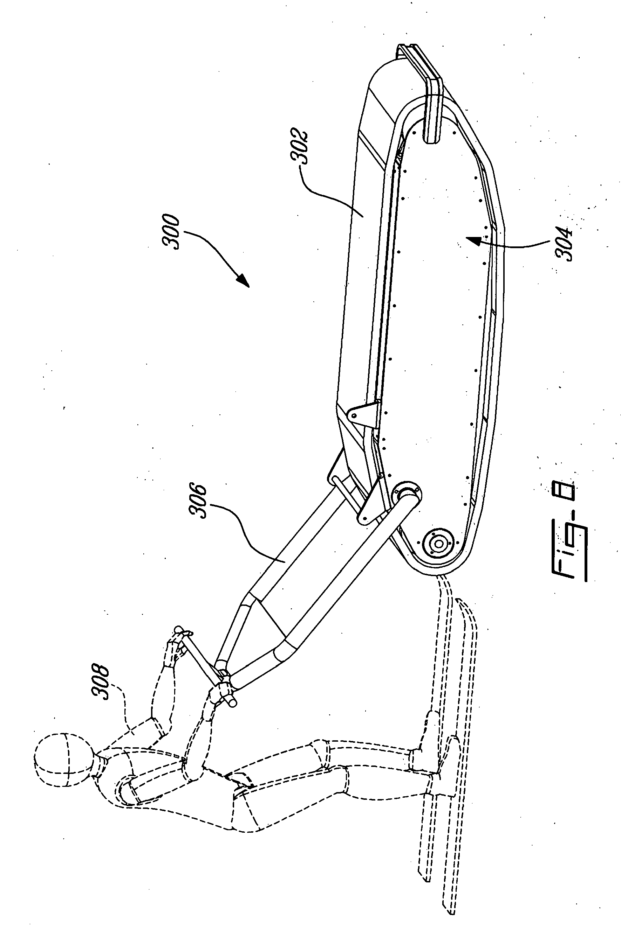

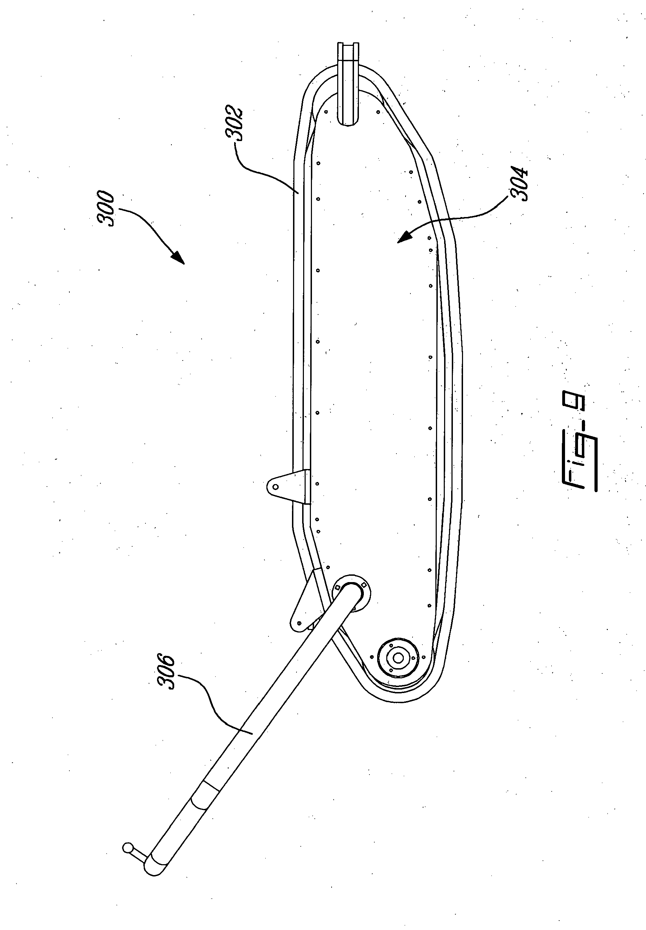

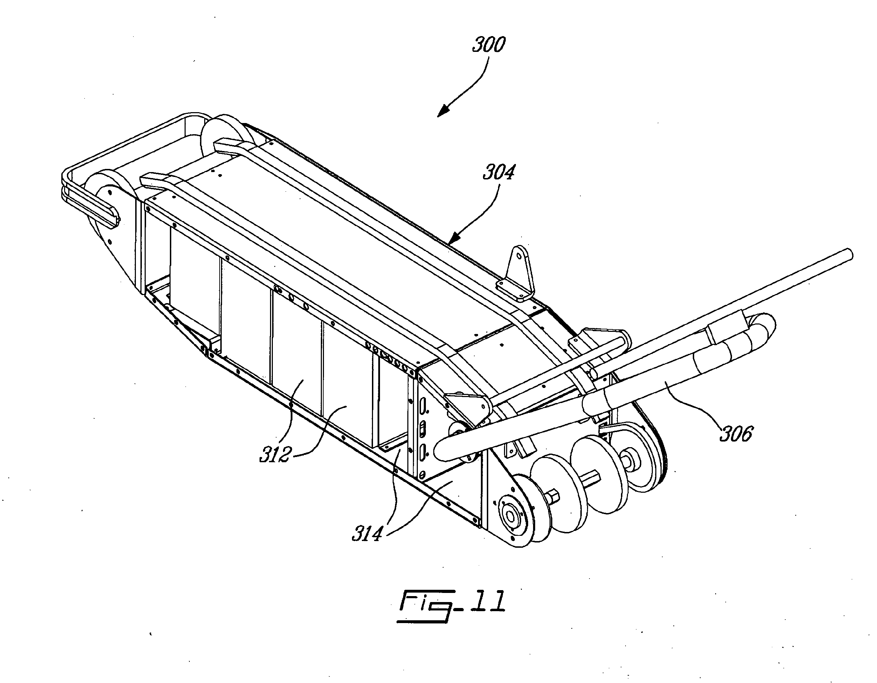

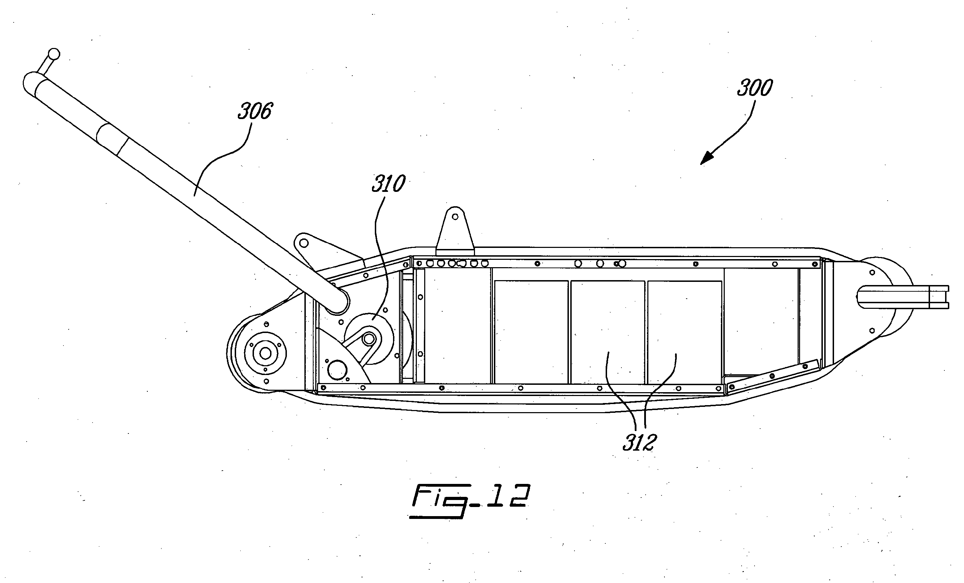

Les figures 8 à 13 sont des vues similaires aux figures 1 à 6 mais montrent un deuxième exemple d'appareil 300 dans lequel un moteur électrique est utilisé. Cet appareil 300 est autrement similaire à l'appareil 10 de l'exemple précédant. L'appareil 300 comprend notamment une chenille 302, un boîtier étanche 304 et un guidon 306, lequel est tenu par un opérateur 308. L'appareil 300 peut aussi être utilisé avec le traîneau 200 de la figure 7.

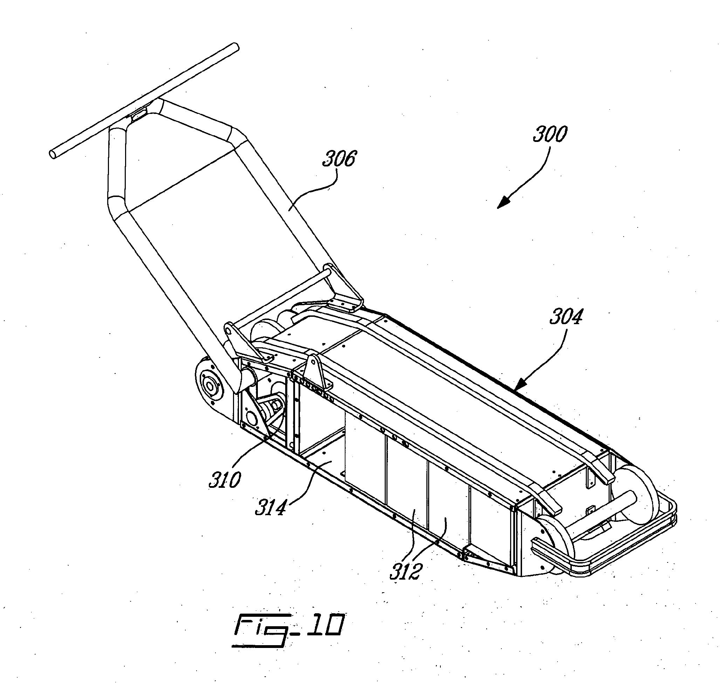

La chenille 302 de l'appareil 300 est entraînée en rotation à l'aide d'un moteur électrique 310 (figure 10). Ce moteur 310 est alimenté en électricité par une ou plusieurs batteries 312, également placées dans la chambre interne 314 du boîtier 304. Le moteur électrique 310 peut être du type AC ou DC, avec ou sans aimants permanents. Un groupe de quatre batteries au plomb à décharge profonde 312 est montré dans l'exemple illustré. Le nombre et le type de batteries 312 peuvent différer selon les besoins. Les batteries 312 sont reliées à un contrôleur électrique actionné par l'opérateur 308 à partir des poignées du guidon 306. Les différentes connexions électriques ne sont pas illustrées dans les figures afin de simplifier les illustrations.

En cours d'utilisation, le moteur électrique 310 dégage de la chaleur. Cette chaleur représente environ 10% de l'énergie électrique puisée dans les batteries 312. La chaleur ainsi dissipée est utilisée dans la chambre interne 314 de l'appareil 300 pour tenir au chaud les batteries 312 lorsque la température extérieure est très froide. Cette chaleur permet alors de conserver une température optimale des batteries malgré le temps très froid. La température optimale peut être par exemple de l'ordre de 20 à 25°C. D'autres températures sont aussi possibles. La récupération de cette chaleur est bénéfique car la plupart des batteries perdent leur efficacité par temps froid. C'est notamment le cas des batteries au plomb. Bien que des types de batteries plus performantes existent, les batteries au plomb demeure un choix intéressant parce qu'elles sont facilement disponibles et relativement peu dispendieuses. Elles résistent mieux au froid que des batteries au nickel ou au lithium, par exemple. L'efficacité des batteries au plomb baisse cependant de façon presque linéaire en fonction de la température, passant par exemple de 100% pour 25°C à 30% pour -40°C, selon le type exact de batterie. La baisse d'efficacité a donc une incidence directe sur l'autonomie de l'appareil 300. En gardant la chaleur dans le boîtier 304 par temps froid, les batteries 312 peuvent alors conserver une efficacité nettement supérieure à celle qu'elles auraient à basse température. L'intérieur du boîtier 304 peut aussi être isolé pour aider à conserver la chaleur.

Un système interne de ventilation est prévu en cas de surchauffe, par exemple lorsque l'appareil 300 opère par temps doux et que le moteur électrique 310 est très sollicité. Ce système interne de ventilation fait partie du circuit de ventilation. Il peut comprendre un thermostat qui actionne au moins un ventilateur assurant un apport d'air de l'extérieur afin de dissiper la chaleur interne. L'entrée d'air et la sortie d'air peuvent être placées dans le haut du guidon 306 à une certaine distance l'un de l'autre. L'air circule alors dans les tuyaux formant les côtés du guidon 306. Le ou les ventilateurs peuvent être placés dans le boîtier 304 ou encore dans le guidon 306. La jonction entre le guidon 306 et le boîtier 304 est configurée afin de permettre un passage de l'air entre les deux. Ainsi, le boîtier 304 peut être construit de façon très étanche jusqu'à la hauteur de l'entrée et de la sortie d'air dans le guidon 306. Une pression positive est maintenue à l'intérieur de la chambre interne 314 afin de réduire les risques d'infiltration d'eau par des endroits qui ne seraient pas entièrement bien scellés. L'appareil 300 pourra même alors être immergé de façon ponctuelle, ce qui peut être requis par exemple lorsque l'appareil 300 doit franchir un ruisseau non gelé ou un autre point d'eau similaire.

Il est possible d'incorporer un élément chauffant, comme par exemple un câble chauffant, à l'intérieur du boîtier 304 afin de garder les batteries 312 au chaud lors de leur charge à l'extérieur par temps froid et aussi lors de leur entreposage extérieur.

Il est également possible de prévoir un support fixe placé au-dessus de la chenille 302. Ce support peut être installé sur l'un ou l'autre des exemples d'appareils 10, 300 présentés. Le support peut être utile pour transporter de l'équipement, comme par exemple une boîte à outils.

### NUMÉROS DE RÉFÉRENCE

- 10: appareil
- 12: chenille
- 14: boîtier
- 14a: paroi supérieure
- 14b: paroi inférieure
- 14c: paroi avant
- 14d: paroi arrière
- 16: parois latérales
- 20: guidon
- 22: opérateur
- 24: skis
- 30: chambre interne
- 32: moteur à essence
- 33: entrée d'air
- 34: glissières supérieures
- 40: rouleaux avant
- 42: axe transversal avant
- 44: plaques
- 46: pare-chocs
- 50: rouleaux arrière
- 52: axe transversal arrière
- 54: plaques
- 60: transmission
- 62: courroie
- 64: courroie
- 66: disque de frein
- 70: réservoir
- 72: batterie
- 80: générateur
- 82: courroie de transmission
- 84: embrayage électrique
- 90: ouvertures
- 92: boîte d'admission
- 94: tuyau de sortie
- 95: conduit flexible
- 96: tuyau d'échappement
- 98: espace
- 100: boîte de sortie
- 102: ouvertures
- 104: conduit flexible
- 200: traîneau
- 202: attelage
- 204: plaque
- 206: élément d'attache
- 210: support (tige transversale)
- 212: plaques
- 300: appareil
- 302: chenille
- 304: boîtier
- 306: guidon
- 308: opérateur
- 310: moteur électrique
- 312: batteries
- 314: chambre interne

## Revendications

1. Un appareil de traction compact (10, 300), incluant :
un boîtier étanche (14, 304) de forme allongée s'étendant dans un axe longitudinal et définissant une chambre interne (30, 314), le boîtier (14, 304) ayant une paroi supérieure (14a) et une paroi inférieure (14b);
une chenille (12, 302) disposée autour du boîtier (14, 304) selon son axe longitudinal et permettant à l'appareil (10, 300) de se mouvoir lorsque la chenille (12, 302) est entraînée en rotation autour du boîtier (14, 304);
un guidon relié au boîtier et s'étendant substantiellement vers l'arrière;
un moteur d'entraînement (32, 310) de la chenille (12, 302), le moteur (32, 310) étant situé dans la chambre interne (30, 314) du boîtier (14) et incluant un arbre de sortie relié mécaniquement à la chenille (12, 302); et
un circuit de ventilation de la chambre interne (30, 314) du boîtier (14, 304), le circuit de ventilation comprenant une entrée d'air (90) et une sortie d'air (102) qui communiquent avec l'extérieur du boîtier (14, 304),
**caractérisé en ce que**
le circuit de ventilation, comprenant un thermostat et au moins un ventilateur, permet de maintenir une température au-dessus du point de congélation à l'intérieur de la chambre interne (30, 314) lorsque la température extérieure est plus basse et permet de refroidir l'intérieur de la chambre interne (30, 314) lorsque sa température est au-dessus d'une limite supérieure.

2. L'appareil (10) selon la revendication 1, **caractérisée en ce que** le moteur est un moteur à essence (32) alimenté en carburant à partir d'un réservoir (70) situé dans la chambre interne (30) du boîtier (14), l'appareil (10) comprenant aussi préférablement un générateur (80) placé dans la chambre interne (30) et servant à produire de l'électricité pouvant alimenter un équipement externe.

3. L'appareil (10) selon la revendication 2, **caractérisé en ce que** l'entrée d'air du circuit de ventilation comprend une boîte d'admission d'air (92) placée en haut de la chambre interne (30) et permettant de réduire une ingestion de neige vers la chambre interne (30), la boîte d'admission d'air (92) comprenant préférablement des ouvertures (90) situées sur au moins un côté du boîtier (14), notamment sur les deux côtés du boîtier (14), chaque ouverture (90) pouvant être en lien avec une sortie d'air de la boîte d'admission d'air (92).

4. L'appareil (10) selon la revendication 2 ou 3, **caractérisé en ce que** l'appareil comprend un tuyau d'échappement (96), le tuyau d'échappement (96) ayant une première extrémité reliée au moteur (32) et une deuxième extrémité débouchant à l'extérieur de la chambre interne (30), la deuxième extrémité du tuyau d'échappement (96) débouchant préférablement à l'arrière de l'appareil (10), entre le boîtier (14) et l'intérieur de la chenille (12).

5. L'appareil (300) selon la revendication 1, **caractérisé en ce que** le moteur est un moteur électrique (310) alimenté par au moins une batterie (312) située dans la chambre interne (314) du boîtier (304), le moteur électrique (310) étant préférablement alimenté par plusieurs batteries au plomb (312) et/ou le circuit de ventilation utilisant préférablement la chaleur dégagée par le moteur électrique (310) comme source de chaleur, notamment afin que la température dans la chambre interne (314) est maintenue approximativement entre 20 et 25°C afin d'assurer une efficacité optimale des batteries (312).

6. L'appareil (300) selon la revendication 1 , **caractérisé en ce qu'**il inclut :
un générateur (80) placé dans la chambre interne (30) du boîtier (14) et servant à produire de l'électricité pouvant alimenter un équipement externe.

7. L'appareil (10, 300) selon la revendication 1 ou 6, **caractérisé en ce qu'**il inclut :
une paire de glissières supérieures (34) disposée de façon longitudinale sur la paroi supérieure (14a) du boîtier (14, 304);
une paire de glissières inférieures disposée de façon longitudinale sur la paroi inférieure (14b) du boîtier (14, 304);
au moins un rouleau avant (42) monté en rotation à l'avant du boîtier (14, 304); et
au moins un rouleau arrière (50) monté en rotation à l'arrière du boîtier (14, 304);
la chenille (12, 302) comprenant une face intérieure qui est supportée par les glissières (34) et les rouleaux (42, 50).

8. L'appareil (10, 300) selon la revendication 7, **caractérisé en ce qu'**il inclut une transmission (60) assurant au moins une partie du lien mécanique entre le moteur (32, 310) et la chenille (12, 302), la transmission (60) étant préférablement reliée mécaniquement au rouleau arrière (50).

9. L'appareil (10) selon la revendication 6, **caractérisé en ce que** le générateur (80) produit de l'électricité à un voltage correspondant à une prise de courant domestique et/ou **caractérisé en ce que** le générateur (80) comprend un axe de rotation disposé de façon transversale à l'axe longitudinal du boîtier (14), le générateur (80) et le moteur à essence (32) étant préférablement reliés mécaniquement par l'intermédiaire d'un embrayage électrique (84).

10. L'appareil (10, 300) selon l'une quelconque des revendications 1 à 9, **caractérisé en ce que** la chambre interne (30, 314) est maintenue à une pression positive relativement à la pression atmosphérique.

11. L'appareil (10, 300) selon l'une quelconque des revendications 1 à 10, **caractérisé en ce que** l'appareil (10, 300) comprend un frein (66) actionnable à partir du guidon (20).

12. L'appareil (10, 300) selon l'une quelconque des revendications 1 à 11, **caractérisé en ce qu'**il comprend un élément chauffant placé dans la chambre interne (30, 314) et pouvant être alimenté en électricité de l'extérieur pour conserver une température minimale lorsque l'appareil (10, 300) n'est pas en utilisation.

13. Une méthode d'utiliser un appareil de traction motorisé (10, 300) du type comprenant un boîtier étanche (14, 304) de forme allongée s'étendant dans un axe longitudinal et définissant une chambre interne (30, 314) dans laquelle est placé un moteur (32, 310), et comprenant également une chenille (12, 302) disposée autour du boîtier (14, 304) selon son axe longitudinal et permettant à l'appareil (10, 300) de se mouvoir lorsque la chenille (12, 302) est entraînée en rotation autour du boîtier (14, 304) à l'aide du moteur (32, 310);
la méthode étant **caractérisée en ce qu'**elle comprend les étapes simultanées suivantes :
maintenir une température minimale dans la chambre interne (30, 314) en utilisant de la chaleur dégagée par le moteur (32, 310);
évacuer la chaleur dans la chambre interne (30, 314) si la température dépasse une valeur limite; et
maintenir une pression positive dans la chambre interne (30, 314).

14. La méthode selon la revendication 13, **caractérisée en ce qu'**elle comprend :
mouvoir l'appareil (10, 300) sur un terrain enneigé, ce qui comprend préférablement soit alimenter le moteur en essence (32) à partir au moins un réservoir à essence (70) situé dans la chambre interne (30), soit alimenter le moteur (310) en électricité à partir d'au moins une batterie (312) située dans la chambre interne (314).

## Patentansprüche

1. Eine kompakte Zugvorrichtung (10, 300), umfassend :
ein dichtes Gehäuse (14, 304) von länglicher Form, das sich in einer Längsachse erstreckt und eine Innenkammer (30, 314) definiert, wobei das Gehäuse (14, 304) eine obere Wand (14a) und eine untere Wand (14b) hat;
eine Raupe (12, 302), die um das Gehäuse (14, 304) herum gemäß seiner Längsachse angeordnet ist und der Vorrichtung (10, 300) ermöglicht, sich in Bewegung zu setzen, wenn die Raupe (12, 302) angetrieben wird, sodass sie um das Gehäuse (14, 304) herum rotiert;
eine Lenkstange bzw. ein Lenkgestänge, mit dem Gehäuse verbunden und sich im Wesentlichen nach hinten erstreckend;
einen Antriebsmotor (32, 310) der Raupe (12, 302), wobei der Motor (32, 310) sich in der Innenkammer (30, 314) des Gehäuse (14) befindet und eine Ausgangswelle umfasst, die mechanisch mit der Raupe (12, 302) verbunden ist; und
einen Lüftungskreis der Innenkammer (30, 314) des Gehäuses (14, 304), wobei der Lüftungskreis einen Lufteinlass (90) und einen Luftauslass (102) umfasst, die mit der Gehäuseaußenseite (14, 304) kommunizieren,
**dadurch gekennzeichnet, dass**
der Lüftungskreis einen Thermostat und wenigstens einen Ventilator umfasst, was ermöglicht, eine Temperatur im Innern der Innenkammer (30, 314) über dem Gefrierpunkt zu halten, wenn die Außentemperatur niedriger ist, und ermöglicht, das Innere der Innenkammer (30, 314) abzukühlen, wenn ihre Temperatur einen oberen Grenzwert überschritten hat.

2. Vorrichtung (10) nach Anspruch 1, **dadurch gekennzeichnet, dass** der Motor ein Benzinmotor (32) ist, der aus einem Tank (70) mit Kraftstoff gespeist wird, der sich in der Innenkammer (30) des Gehäuses (14) befindet, wobei die Vorrichtung (10) vorzugsweise auch einen Generator (80) umfasst, der sich in der Innenkammer (30) befindet und dazu dient, Elektrizität zu erzeugen, um eine externe Ausrüstung versorgen zu können.

3. Vorrichtung (10) nach Anspruch 2, **dadurch gekennzeichnet, dass** der Lufteinlass des Lüftungskreises eine Lufteinlass-Box (92) umfasst, die oben in der Innenkammer (30) angeordnet ist und ermöglicht, ein Eindringen von Schnee in die Innenkammer (30) zu reduzieren, wobei die Lufteinlass-Box (92) vorzugsweise Öffnungen (90) umfasst, die sich auf wenigstens einer Seite des Gehäuses (14), insbesondere auf beiden Seiten des Gehäuses (14) befinden, wobei jede Öffnung (90) verbunden sein kann mit einem Luftauslass der Lufteinlassbox (92).

4. Vorrichtung (10) nach Anspruch 2 oder 3, **dadurch gekennzeichnet, dass** die Vorrichtung ein Auspuffrohr (96) umfasst, wobei das Auspuffrohr (96) ein erstes, mit dem Motor (32) verbundenes Ende und ein zweites, außerhalb der Innenkammer (30) mündendes Ende umfasst, wobei das zweite Ende des Auspuffrohrs (96) vorzugweise auf der Rückseite der Vorrichtung (10) mündet, zwischen dem Gehäuse (14) und der Innenseite der Raupe (12).

5. Vorrichtung (300) nach Anspruch 1, **dadurch gekennzeichnet, dass** der Motor ein elektrischer Motor (310) ist, gespeist durch wenigstens eine in der Innenkammer (314) des Gehäuses (304) angeordnete Batterie (312), wobei der Elektromotor (310) vorzugsweise durch mehrere Bleibatterien (312) gespeist wird und/oder der Lüftungskreis vorzugsweise die durch den Elektromotor (310) abgegebene Wärme als Wärmequelle benutzt, insbesondere um die Temperatur in der Innenkammer (314) auf ungefähr 20 bis 25 °C zu halten, so dass eine optimale Effizienz der Batterien (312) gewährleistet ist.

6. Vorrichtung (300) nach Anspruch 1, **dadurch gekennzeichnet, dass** sie umfasst:
einen in der Innenkammer (30) des Gehäuses (14) angeordneten Generator (80), der dazu dient, den Strom zur Speisung einer externen Ausrüstung zu erzeugen.

7. Vorrichtung (300) nach Anspruch 1 oder 6, **dadurch gekennzeichnet, dass** sie umfasst:
ein Paar obere Gleitschienen (34), in Längsrichtung auf der oberen Wand (14a) des Gehäuses (14, 304) angeordnet;
ein Paar untere Gleitschienen, in Längsrichtung auf der unteren Wand (14b) des Gehäuses (14, 304) angeordnet;
wenigstens eine vordere Rolle (42), drehbar an der Vorderseite des Gehäuses befestigt (14, 304); und
weinigstens eine hintere Rolle (50), drehbar an der Vorderseite des Gehäuses befestigt (14, 304);
die Raupe (12, 302), die eine Innenseite umfasst, die durch die Gleitschienen (34) und die Rollen (42, 50) getragen wird.

8. Vorrichtung (10, 300) nach Anspruch 7, **dadurch gekennzeichnet, dass** sie eine Transmission (60) umfasst, die wenigstens einen Teil der mechanischen Verbindung zwischen dem Motor (32, 310) und der Raupe (12, 302) gewährleistet, wobei die Transmission (60) vorzugweise mechanisch mit der hinteren Rolle (50) verbunden ist.

9. Vorrichtung (10) nach Anspruch 6, **dadurch gekennzeichnet, dass** der Generator (80) Elektrizität mit einer Spannung erzeugt, die derjenigen einer Haushaltssteckdose entspricht, und/oder **gekennzeichnet dadurch, dass** der Generator (80) eine transversal zur Längsachse des Gehäuses (14) angeordnete Rotationsachse umfasst, wobei der Generator (80) und der Bezinmotor (32) vorzugsweise mechanisch durch eine elektrische Kupplung (84) verbunden sind.

10. Vorrichtung (10, 300) nach einem der Ansprüche 1 bis 9, **dadurch gekennzeichnet, dass** die Innenkammer (30, 314) auf einem in Bezug auf den Luftdruck positiven Druck gehalten wird.

11. Vorrichtung (10, 300) nach einem der Ansprüche 1 bis 10, **dadurch gekennzeichnet, dass** die Vorrichtung (10, 300) eine von der Lenkstange bzw. dem Lenkgestänge (20) aus bedienbare Bremse (66) umfasst.

12. Vorrichtung (10, 300) nach einem der Ansprüche 1 bis 11, **dadurch gekennzeichnet, dass** sie ein in der Innenkammer (30, 314) angeordnetes Heizelement umfasst, das von außen mit Strom gespeist werden kann, um eine Mindesttemperatur aufrecht zu erhalten, wenn die Vorrichtung nicht benützt wird.

13. Verfahrensweise zur Benutzung einer motorisierten Zugvorrichtung (10, 300) des Typs mit einem dichten Gehäuse (14, 304) von sich in einer Längsachse erstreckender länglicher Form, das eine Innenkammer (30, 314) abgrenzt, in der sich ein Motor (32, 310) befindet, und mit ebenfalls einer Raupe (12, 302), die um das Gehäuse (14, 304) herum entsprechend ihrer Längsachse angeordnet ist und der Vorrichtung (10, 300) ermöglicht, sich in Bewegung zu setzen, wenn ein Antrieb mit Hilfe des Motors (32, 310) die Raupe (12, 302) in Rotation um das Gehäuse (14, 304) herum versetzt;
wobei die Verfahrensweise **dadurch gekennzeichnet ist, dass** sie die folgenden simultanen Schritte umfasst:
Aufrechterhaltung einer Minimaltemperatur in der Innenkammer (30, 314) durch die von dem Motor (32, 310) abgegebene Wärme;
Abführung der Wärme in der Innenkammer (30, 314), wenn die Temperatur einen Grenzwert überschreitet; und
Aufrechterhaltung eines positiven Drucks in der Innenkammer (30, 314).

14. Verfahrenweise nach Anspruch 13, **dadurch gekennzeichnet, dass** es umfasst:
Befahren eines beschneiten Geländes, wobei vorzugsweise entweder der Benzinmotor (32) durch einen in der Innenkammer (30) befindliche Benzintank (70) gespeist wird oder der Elektromotor (310) durch eine in der Innenkammer (30) befindliche Batterie (312) gespeist wird.

## Claims

1. A compact pulling apparatus (10, 300), including:
a watertight elongated housing (14, 304) extending along a longitudinal axis and defining an inner chamber (30, 314), the housing (14, 304) including a top wall (14a) and a bottom wall (14b);
a track (12, 302) disposed around the housing (14, 304) along its longitudinal axis and enabling the apparatus (10, 300) to move when the track (12, 302) is rotatably driven around the housing (14, 304);
a handlebar connected to the housing and extending substantially rearward;
a driving motor (32, 310) for the track (12, 302), the motor (32, 310) being located within the inner chamber (30, 314) of the housing (14, 304) and including an output shaft mechanically connected to the track (12, 302); and
a ventilation circuit for the inner chamber (30, 314) of the housing (14, 304), the ventilation circuit including an air inlet (90) and an air outlet (102) which communicate with the exterior of the housing (14, 304),
**characterized in that**
the ventilation circuit, which includes a thermostat and at least one ventilator, allows keeping a temperature above the freezing point inside the inner chamber (30, 314) when the outside temperature is lower and allows cooling the interior of the inner chamber (30, 314) when its temperature is above an upper threshold.

2. The apparatus (10) according to claim 1, **characterized in that** the motor is a gasoline engine (32) supplied in fuel from a tank (70) located within the inner chamber (30) of the housing (14), the apparatus (10) also preferably including a generator (80) located within the inner chamber (30) and that can produce electricity to power an external equipment.

3. The apparatus (10) according to claim 2, **characterized in that** the air inlet of the ventilation circuit includes an air inlet box (92) disposed at the top of the inner chamber (30) and which can mitigate snow ingestion toward the inner chamber (30), the air inlet box (92) preferably including apertures (90) located on at least one side of the housing (14), such as on both sides of the housing (14), each aperture (90) being possibly connected to an air outlet of the air inlet box (92).

4. The apparatus (10) according to claim 2 or 3, **characterized in that** the apparatus includes an exhaust pipe (96), the exhaust pipe (96) including a first end connected to the engine (32) and a second end leading to the exterior of the inner chamber (30), the second end of the exhaust pipe (96) preferably leading to the rear of the apparatus (10), between the housing (14) and inside of the track (12).

5. The apparatus (300) according to claim 1, **characterized in that** the motor is an electric motor (310) powered by at least one battery (312) located within the inner
chamber (314) of the housing (304), the electric motor (310) being preferably powered using several lead batteries (312) and/or the ventilation circuit preferably uses heat released by the electric motor (310) as a heat source, such as to maintain the temperature within the inner chamber approximately between 20 and 25°C so as to ensure an optimal efficiency of the batteries (312).

6. The apparatus (10, 300) according to claim 1, **characterized in that** it includes:
a generator (80) located within the inner chamber (30, 314) of the housing (14, 304) and that can produce electricity to power an external equipment.

7. The apparatus (10, 300) according to claim 1 or 6, **characterized in that** it includes:
a pair of top skids (34) disposed longitudinally on the top wall (14a) of the housing (14, 304);
a pair of bottom skids disposed longitudinally on the bottom wall (14b) of the housing (14, 304);
at least one front roller (42) rotatably connected at the front of the housing (14, 304); and
at least one rear roller (50) rotatably connected at the rear of the housing (14, 304);
the track (12, 302) including an inner face which is supported by the skids (34) and the rollers (42, 50).

8. The apparatus (10, 300) according to claim 7, **characterized in that** it includes a transmission (60) which forms at least part of the mechanical connection between the motor (32, 310) and the track (12, 302), the transmission (60) being preferably mechanically connected to the rear roller (50).

9. The apparatus (10, 300) according to claim 6, **characterized in that** the generator (80) outputs electricity at a voltage corresponding to that of a domestic power outlet and/or **characterized in that** the generator (80) includes a rotation axis disposed transversely to the longitudinal axis of the housing (14, 304), the generator (80) and the gasoline engine (32) being preferably mechanically connected through an electric clutch (84).

10. The apparatus (10, 300) according to any one of claims 1 to 9, **characterized in that** the inner chamber (30, 314) is maintained at a positive pressure with reference to the atmospheric pressure.

11. The apparatus (10, 300) according to any one of claims 1 to 10, **characterized in that** the apparatus (10, 300) includes a brake (66) which can be operated from the handlebar (20).

12. The apparatus (10, 300) according to any one of claims 1 to 11, **characterized in that** it includes a heating element provided in the inner chamber (30, 314) that can be powered with electricity from the outside to maintain a minimum temperature when the apparatus (10, 300) is not in use.

13. A method of using a motorized pulling apparatus (10, 300) of the type including an elongated watertight housing (14, 304) extending along a longitudinal axis and defining an inner chamber (30, 314) inside which a motor (32, 310) is located, and also including a track (12, 302) disposed around the housing (14, 304) along its longitudinal axis and enabling the apparatus (10, 300) to move when the track (12, 302) is rotatably driven around the housing (14, 304) by means of the motor (32, 310);
the method being **characterized in that** it includes the following simultaneous
steps:
maintaining a minimum temperature within the inner chamber (30, 314) using heat released by the motor (32, 310);
evacuating heat from the inner chamber (30, 314) if the temperature exceeds a threshold value; and
maintaining a positive pressure inside the inner chamber (30, 314).

14. The method according to claim 13, **characterized in that** it includes:
moving the apparatus (10, 300) over a snow-covered terrain, this preferably including either supplying the engine (32) with fuel from at least one fuel tank (70) located within the inner chamber (30), or either powering the motor (310) with electricity from at least one battery (312) located within the inner chamber (314).
